(19) Europäisches Patentamt
European Patent Office
Office européen des brevets

(11) Publication number: **0 409 411 A2**

(12) # EUROPEAN PATENT APPLICATION

(21) Application number: **90306723.9**

(51) Int. Cl.5: **G11B 5/72**, G11B 5/702

(22) Date of filing: **20.06.90**

(30) Priority: **21.07.89 US 383819**

(43) Date of publication of application: **23.01.91 Bulletin 91/04**

(84) Designated Contracting States: **BE DE FR GB IT NL**

(71) Applicant: **MINNESOTA MINING AND MANUFACTURING COMPANY**
**3M Center, P.O. Box 33427**
**St. Paul, Minnesota 55133-3427(US)**

(72) Inventor: **Lau, Felix P. c/o Minnesota Mining and**
**Manufactoring Comp. 2501 Hudson Road St. Paul**
**Minnesota 55144 - 1000(US)**
Inventor: **Enslin, Michael S. c/o Minnesota Mining and**
**Manufactoring Comp. 2501 Hudson Road**
**St. Paul, Minnesota 55144-1000(US)**
Inventor: **Langlois, Denius J. c/o Minnesota Minig and**
**Manufactoring Comp. 2501 Hudson Road**
**St. Paul, Minnesota 55144-1000(US)**
Inventor: **Norman, Colin F. c/o Minnesota Mioning and**
**Manufactoring Comp. 2501 Hudson Road**
**St. Paul, Minnesota 55144-1000(US)**
Inventor: **Burguette, Mario D. c/o Minnesota Mining and**
**Manufactoring Comp. 2501 Hudson Road**
**St.Paul, Minnesota 55144-1000(US)**
Inventor: **Jackson, Andrew C. c/o Minnesota Minig and**
**Manufactoring Comp. 2501 Hudson Road**
**ST. Paul, Minnesota 55144-1000(US)**
Inventor: **Swales, Timothy G.E. c/o Minnesota Mining and**
**Manufactoring Comp. 2501 Hudson Road**
**St. Paul, Minnesota 55144-1000(US)**
Inventor: **Su, Biing-Huei D. c/o Minnesota Minig and**
**Manufactoring Comp. 2501 Hudson Road**
**St.Paul Minnesota 5144-1000(US)**

(74) Representative: **Baillie, Iain Cameron et al**
**c/o Ladas & Parry Isartorplatz 5z 5**
**D-8000 München 2(DE)**

(54) **Magnetic recording medium with cured surface coating.**

(57) The invention provides magnetic recording media, capable of accommodating higher oxide loadings, with improved durability, and a reduced pore volume. The instant media have an integral protective coating which in use contributes to the stability of a flying head on a stable air bearing, by reducing surface porosity, while also improving durability. The magnetic media of the present invention may also include a lubricant that may be adhered to the magnetic layer.

EP 0 409 411 A2

# MAGNETIC RECORDING MEDIUM WITH CURED SURFACE COATING

## Field of the Invention

This invention relates to a magnetic recording medium, and particularly, to a magnetic recording medium having an integral protective coating.

## Background of the Invention

A magnetic recording medium typically consists of a cured coating derived from a dispersion of magnetizable particles in a polymeric binder which is coated on a non-magnetic support. Magnetic media are used in a variety of forms including audio and video tapes, computer diskettes, and more recently, stretched surface recording disks (SSR). SSR generally consist of a rigid, circular support and a thin polymeric film having a recording layer suitably attached to the periphery of the support. See, for example, U.S. Patent No. 4,623,570.

Each of these various types of magnetic media typically must have exceptionally smooth, durable recording surfaces, with minimal coefficients of friction. Lubricants are often used in magnetic media to aid in minimizing the wear between the media and the recording head. Magnetic media that have polymeric magnetic layers, particularly media with high magnetizable particle loadings, have a vast number of minute pores that open onto the surface of the recording layer. Lubricant is either added to the dispersion of binder and magnetizable particles before coating, or added as an overcoat layer and allowed to soak into the magnetic layer. Either method results in lubricant dispersed throughout the magnetic layer, and absorbed in the pores of the layer. The absorption of the lubricant into the pores requires the addition of a larger quantity of lubricant to provide the necessary lubricant at the head-media interface. With use, lubricants are frequently removed via various modes, resulting in decreased lubrication and undesirably large deposits of lubricant on the transducer head of the recording equipment.

Because it is desirable that the maximum amount of information be recorded on a given size media, efforts to increase oxide loadings are continually being made. High oxide loadings can present at least two problems. First, the polymeric binder material which is used to anchor the magnetizable pigment to the nonmagnetic support is often sacrificed with increased oxide loadings. Thus, the durability of the media can be decreased when there is insufficient polymeric binder to adequately anchor the pigment to the support.

Secondly, higher oxide loadings typically increase the porosity of the medium. In addition to the need for increased lubricant, porosity can have an effect on the stability of the air bearing. Many transducer head/media systems are designed so that in use the head rides on a bearing of air at a desired height above the medium. This phenomena of a so-called air bearing or of hydrodynamic lubrication is now well known in the art. See, for example, Canadian Patent No. 1,215,778 and European Patent 213875.

Therefore, there is a need for magnetic media that have very high oxide loadings while remaining durable. In addition, there is a need for a magnetic recording medium, providing a stable air bearing to allow stable head flying, and a reduced amount of lubricant absorbed into the pores of the media.

## Summary of the Invention

Accordingly, the present invention provides magnetic recording media, capable of accommodating higher oxide loadings, with improved durability, and a reduced pore volume. The instant media have an integral protective coating which in use contributes to the stability of a flying head on a stable air bearing, by reducing surface porosity, while also improving durability. The magnetic media of the present invention may also include a lubricant that may be adhered to the magnetic layer. "Surface porosity," as used herein, refers to the volume of the pores that open onto the recording surface of the magnetizable layer.

The present invention provides magnetic recording media having a magnetizable coating, the magnetizable coating comprising: a) an effective amount of a polymeric binder layer having a magnetizable pigment; and b) an effective amount of a protective coating integral with the binder layer, and derived from a composition comprising an ethylenically unsaturated alkoxyalkyl heterocyclic compound, having the

following general formula:

$A^1$-Z-$A^2$ (I)

in which $A^1$ and $A^2$ independently are alkoxyalkyl groups having terminal ethylenic unsaturation and having the general formula:

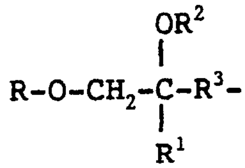

in which R-O- is a monovalent residue (formed by removal of the active hydrogen from an -OH group) of an aliphatic terminally unsaturated primary alcohol, ROH, R having the formula:

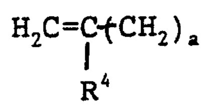 or preferably $[E(CH_2)_b]_m R^5(CH_2)_c$

wherein:

E is

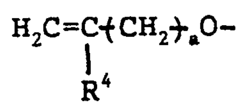 or 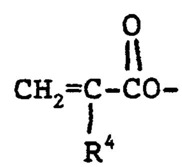

a and c are independently an integer of 1 to 6, b is zero or an integer of 1 to 6, $R^1$ and $R^4$ are independently hydrogen or methyl, $R^5$ is an aliphatic group having 1 to 15 carbon atoms (preferably alkylene of up to 15 carbon atoms) and optionally one or two catenary (i.e., backbone) oxygen atoms, or

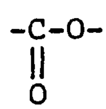 groups

a valence of m + 1, and

m is an integer of 1 to 5,

$R^2$ is preferably hydrogen, but can be

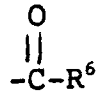 or 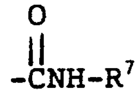

wherein $R^6$ is preferably alkenyl, but can be alkyl (each preferably having 2 to 5 carbon atoms), and can be substituted by a phenyl or carboxyl group, and $R^7$ is an aliphatic group (of up to eight carbon atoms, e.g., alkyl) or aromatic group (preferably having up to 8 carbon atoms, and more preferably a phenyl group), and $R^7$ is most preferably an acryloyloxyalkyl or a methacryloyloxyalkyl group,

$R^3$ is an alkylene group having 1 to 6 carbon atoms and optionally one catenary oxygen atom; and

Z is a heterocyclic group of the formula:

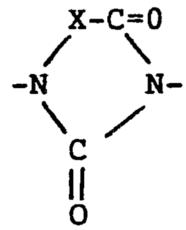

wherein:

X is a divalent group which is required to complete a 5- or 6-membered heterocyclic ring, preferably X is

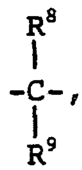 but can be 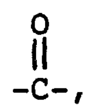 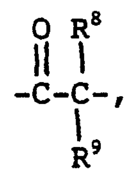

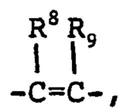 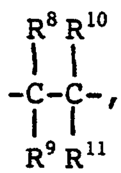 or 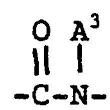

wherein $R^8$, $R^9$, $R^{10}$, and $R^{11}$ are independently hydrogen or lower alkyl (of 1 to 4 carbon atoms), cycloalkyl (of 3 to 6 carbon atoms), or aromatic group (of 6 to 12 carbon atoms) and $A^3$ is an alkoxyalkyl group as defined above for $A^1$ and $A^2$.

The integral protective coating increases the durability of the magnetizable layer and reduces surface porosity. An "effective amount" of the integral coating, as used herein, is an amount that significantly reduces surface porosity. Preferably surface porosity is reduced to a level sufficient to provide a stable air bearing. Evidence of a stable air bearing may be provided by data regarding the flying height of a recording head. In one system, using a 5-rail slotted spherical glass head, a preferred flying height is at least about 0.15 ìm. In this system, it is believed that reducing porosity to about 12%, and preferably about 8%, or less, of the total volume of the magnetizable coating or layer, will provide a stable air bearing for a reliable flying SSR head to medium interface distance of about 0.15ìm. The thickness of the magnetizable layer and the smoothness of magnetizable layer are also variables that contribute to the amount of the integral coating necessary to provide a stable air bearing.

The present invention also provides an SSR comprising an annular support, having at least one base portion between its inside and outside diameter, with outer and inner raised annular ridges projecting from the base portion. The inner raised annular ridge has a diameter less than that of the outer raised annular ridge. An annular recording medium film, concentric with the annular support, is supported by the inner and outer raised annular ridges, and held in radial tension across and out of contact with the base portion. The recording medium film comprises: a non-magnetic support; a coating of a dispersion of a magnetizable pigment in a binder; and an integral protective coating comprising a polymerized compound of Formula I.

The protective coating may also function as a primer for a lubricant layer comprising a functional perfluoro-polyether and may include an added primer comprising an amino functional alkoxy silane.

As used herein, the term "integral," as applied to separate layers of material, means that the two layers have an interfacial area which is not distinct, but is a transition region from one layer to another layer. In the case of the instant binder layer and protective coating, the protective coating occupies the pores of the polymerized binder layer, and may change the surface characteristics of the outermost surface of the recording medium. In addition, the coating also increases the cohesive strength of the pigment binder layer. As no uniform boundary exists between the two layers, the protective coating has no uniform thickness. An analogy can be drawn to a coating of paint or stain on wood. The paint or stain soaks into the wood, with a layer of paint or stain also sometimes remaining on the surface of the wood.

As used herein, the phrase "equivalent thickness" means the thickness the protective coating material

would have if it were coated onto a perfectly smooth continuous surface, without pores, having an area equal to that of the surface of the magnetic recording medium.

## Detailed Description

The present invention provides a magnetic recording medium having an integral protective coating. The protective coating may also function as a primer layer to facilitate adhesion of a lubricant such as a perfluoro-polyether. Magnetic media of the present invention comprise, in general terms, a polymerized dispersion of magnetizable particles in a binder, provided as a coating on a non-magnetic support.

### Binders

Binders that are useful in the present invention include any suitable polymeric binder. Examples of suitable binders include, for example, polyvinyl chloride, polyvinyl acetate, polyacrylates, polyester, polyester amides, a thermoplastic polyurethane resin, cellulose derivatives, such as cellulose-acetate butyrate, styrene-butadiene copolymers, a phenoxy resin, a copolymer of butadiene and methacrylic acid, copolymers of at least two monomers selected from the group consisting of vinyl chloride, vinyl acetate, acrylonitrile, vinyl alcohol, vinyl butyral and vinylidene chloride, for example, VAGH commercially available from Union Carbide, and other various thermosetting, thermoplastic, or radiation curable resins.

### Integral Protective and Reinforcing Coatings

The present invention provides an integral protective and reinforcing coating comprising a polymerized (ethylenically unsaturated alkoxyalkyl heterocyclic) compound. This heterocyclic compound is dissolved in a suitable solvent and applied to the binder layer. The heterocyclic compound is preferably present at a concentration of at least 2% by weight, and more preferably at least 4% by weight.

The solvated compound is absorbed or migrates into the exposed surface pores of the binder layer having magnetic pigment. The extent of migration is dependent on a number of factors, including the porosity of the binder layer, the type of solvent, and the extent to which the binder is cured at the time the dissolved monomer is coated on the binder layer.

When the protective coating compound is polymerized, it becomes integral with the binder layer. A highly crosslinked interpenetrating network or pseudo-interpenetrating network is believed formed between the binder layer and the protective coating. The protective coating increases the durability of the magnetizable layer and reduces pore volume. In addition, the reduced porosity provides a more stable air bearing for use with a flying head.

The poly (ethylenically unsaturated alkoxy heterocyclic) compounds have the general Formula I above, for example, as described in U.S. Patent No. 4,249,011, which is incorporated herein by reference.

The preferred compounds of Formula I are those in which E is:

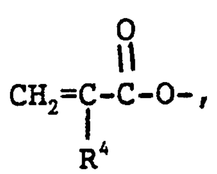

m is 2 to 5, most preferably 3,

x is: 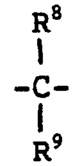

wherein $R^8$ and $R^9$ are independently selected from the group consisting of: -H,$-CH_3$, or $-CH_2-CH_3$.

It is also preferred that:

b is zero to 3, most preferably 1;

C is 1 to 5, most preferably 1;

$R^2$ is hydrogen;

$R^1$ and $R^4$ are independently hydrogen or $-CH_3$;

$R^3$ is an alkylene group having 1 to 3 carbons, most preferably $-CH_2$; and

$R^5$ is an alkylene group with 1 to 4 carbon atoms, most preferably 1 carbon.

Compounds of Formula I can be prepared by the lewis acid catalyzed reaction of n moles of an ethylenically unsaturated primary alcohol to an epoxy-substituted heterocycle in accordance with the equation:

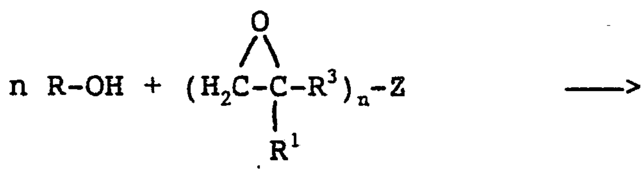

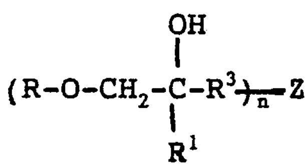

II

R, $R^1$, $R^3$, and Z are defined for the compounds of Formula I, and n is 2 or 3.

The polyglycidyl heterocyclic intermediates useful in the preparation of the compounds of the present invention are disclosed in U.S. Patent Nos. 3,808,226 and 4,071,477. Preferably, the reaction is performed in solution. However, it also can be performed in the absence of solvent. Generally, a solution of an epoxy-substituted heterocycle can be added incrementally to a mixture of (1) an ethylenically unsaturated primary alcohol (or mixtures of ethylenically unsaturated primary alcohols), (2) an inhibitor for thermal polymerization, and (3) a Lewis acid while maintaining the temperature of the mixture at 50½ to 120½ C, preferably about 80½ to 100½ C, until the disappearance of the epoxy group, as indicated by chemical titration or nuclear magnetic resonance spectrometric analysis. Heating the mixture for from 2 to 40 hours usually suffices to complete the reaction, after which volatiles are removed by vacuum distillation.

The compounds of Formula II can then be acylated by reaction with an acylating agent, preferably an acyl halide, an acyl anhydride, or an isocyanate that contains polymerizable ethylenically unsaturated groups.

In addition to acting as a protective and reinforcing coating, reducing pore volume, and increasing the integrity and durability of the medium, the protective coating can also serve as a primer layer for a bondable lubricant. Added primers may be used in conjunction with the protective coating to aid in adherence of the bondable lubricant.

## Added Primers

Additional primers useful for aiding in adherence of the bondable lubricant include organic compounds containing at least one primary or secondary amine functionality in addition to some other functionality capable of forming a covalent bond to the surface of the magnetic media; including silanes, borates, zircoaluminates, titanates, and phosphonates.

Alkoxy silanes are preferred compounds for use with the compound of Formula I to aid in adhesion of a polymerizable perfluoro-polyether lubricant.

The alkoxy silane should have at least one primary or secondary amine moiety, preferably with the primary or secondary amine in the three position from the silane (e.g. 3-amino-propyltriethoxysilane). Preferred alkoxy silanes for use as primers in the present invention have the following general formula:

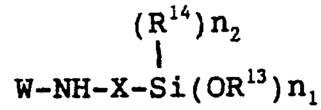

wherein
$R^{13}$ is a lower alkyl having 1 to 3 carbon atoms;
$R^{14}$ is a lower alkyl having 1 to 3 carbon atoms;
$n_1$ is 2 or 3; $n_2$ is 0 or 1;
X is a lower alkylene moiety having 2 to 4, preferably three carbon atoms; and
W is hydrogen, a lower alkyl having one to four carbon atoms, or a primary or secondary amine terminated lower alkyl having one to four carbon atoms.

Most preferred alkoxysilanes include N-Ã-amino ethyl-gamma-amino propyltrimethoxysilane, 3-amino propyltriethoxysilane, and 3-amino propyltrimethoxysilane.

Examples of suitable amino functional alkoxy silanes include:
N-Ã-aminoethyl-gamma-aminopropyltrimethoxysilane,
N-Ã-aminoethyl-gamma-aminopropylmethyldimethoxysilane,
N-Ã-aminoethyl-gamma-aminopropyldimethylmethoxysilane,
3-aminopropyltriethoxysilane,
3-aminopropylmethyldiethoxysilane,
3-aminopropyldimethylethoxysilane,
3-aminopropylmethyldimethoxysilane,
3-aminopropyldimethyldimethoxysilane,
bis(2-hydroxyethyl)-aminopropyltriethoxysilane,
bis(2-hydroxyethyl)-aminopropylmethyldiethoxysilane,
bis[3-(triethoxysilyl)propyl]amine,
bis[3-(trimethyldiethoxysilyl)propyl]amine,
bis[3-(trimethoxysilyl)propyl]ethylenediamine,
N.N′-diethyl-3-aminopropylmethyldimethoxysilane,
N.N′-dimethylaminophenyltriethoxysilane,
N.N′-dimethylaminophenylmethyldiethoxysilane,
N-methylaminopropyltriethoxysilane,
N-methylaminopropylmethyldiethoxysilane,
methyl-3-[2-(3-trimethoxysilylpropylamino)ethylamino]-3-propionate,
methyl-3-[2-(3-methyldimethoxysilylpropylamine)ethylamino]-3-propionate,
Ã-trichlorosilyl-4-ethylpyridine,
triethoxysilylpropylethylcarbamate,
methyldiethoxysilylpropylethylcarbamate,
N-(triethoxysilylpropyl) urea, N-(methyldiethoxysilylpropyl)urea,
1-trimethoxysilyl-2,1-(p,m-aminomethyl)phenylethane,
1-methyldimethoxysilyl-2,1-(p,m-aminomethyl)phenylethane,
trimethoxysilylpropylallylamine,
methyldimethoxysilylpropylallylamine,
trimethoxysilylpropyldiethylenetriamine,
methyldimethoxysilylpropyldiethylenetriamine,
N-(trimethoxysilylpropyl)ethylenediamine sodium triacetate,
N-(methyldimethoxysilylpropyl)ethylenediamine sodium triacetate,
p-aminophenyltrimethoxysilane,
p-aminophenylmethyldimethoxysilane,
aminoethylaminomethylphenethyltrimethoxysilane,
aminoethylaminomethylphenethylmethyldimethoxysilane,
N-Ã-(aminoethyl)-gamma-aminopropyltrimethoxysilane,
N-Ã-(aminoethyl)-gamma-aminopropylmethyldimethoxysilane,
N-Ã-(aminoethyl)-gamma-aminopropyldimethylmethoxysilane,
N-Ã-phenyl-gamma-aminopropyltrimethoxysilane, and
N-Ã-phenyl-gamma-aminopropylmethyldimethoxysilane.

The alkoxy silane and the compound of Formula I are preferably coated together by dissolving them in

a suitable solvent and coating them onto the magnetic layer. In addition, the solution of Formula I may be coated first with the alkoxy silane coated on top. Upon curing, a cross-linked network is formed with the binder of the magnetic layer as is described above for the protective coating alone.

## Lubricants

The magnetic recording medium of the present invention also preferably includes a lubricant. The lubricant may be either bound to the magnetizable layer or simply dispersed therein or coated thereon.

Examples of well known lubricants include saturated or unsaturated higher fatty acids, fatty acid esters, higher fatty acid amides, higher alcohols, each containing 10 or more carbon atoms, preferably 12 or more carbon atoms, silicone oils, mineral oils, edible oils, or fluoride type compounds, for example, myristic acid, oleic acid butylmyristate, or combinations thereof.

As disclosed in U.S. Patent No. 3,490,946, fluorocarbon compounds can be used as lubricants for magnetic recording media. U.S. Patent Nos. 3,778,308; 4,267,238; and 4,268,556 disclose the use of perfluoro-polyethers (PPE) as lubricant protective layers for magnetic media.

Lubricants having a suitable pendant or terminal functional group can be chemically bound or crosslinked to the magnetizable layer. For example, lubricants comprising acrylated perfluoro-polyethers may be bound to the magnetizable layer. See, for example, U.S. Patent No. 4,526,833.

The fluorinated hydrocarbon polymers suitable for use as lubricants in the present invention have the following general formula:

$Q(R_f)_kC_a\text{-}F_{2a}\text{-}Z$ (III)

wherein

Q comprises a polymerizable group attached to $R_f$, which represents a chain of two or more randomly distributed perfluoroalkylene oxide units which may be branched or straight chain structures, exemplified by the group consisting of:

$$-(C_aF_{2a}O)-$$ and 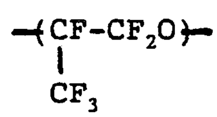

in which

a is independently an integer of 1 to 4,

k is the number of such units having a value from 2 to 300 such that the segment $R_f$ Preferably has a number average molecular weight of 500 to 10,000 (more preferably 500 to 6,000), and

Z is $OC_aF_{2a+1}$ or Q

The use of the term "independently" with reference to subscript "a" means that, while within each perfluoroalkylene oxide unit the subscripts "a" have the same number, the "a" may vary independently from one perfluoroalkylene oxide unit to another. Thus, Formula III encompasses polyethers in which $-CF_2O-$ and $-C_3F_6O-$ are bonded together as randomly repeating units in the molecule, the subscript "a" being 1 in the former unit and 3 in the latter unit.

If Z is not Q, it preferably is $-OCF_3-$, $-OCF_2CF_3$, or $-OCF(CF_3)CF_3$. Typically the perfluoroalkylene oxide units will be $-CF_2O-$, $-C_2F_4O-$, and/or $-C_3F_6O-$.

Preferred perfluoropolyether monomers are the ethylenically unsaturated monomers disclosed in U.S. Patent No. 3,810,874 and U.S. Patent No. 4,321,404 wherein Q of the above Formula III is selected from:

(a) 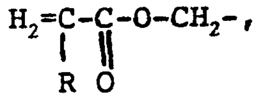 (b) 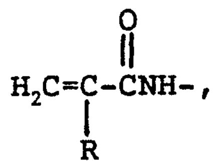

(c) 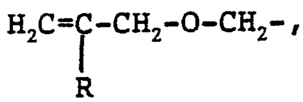 and (d) 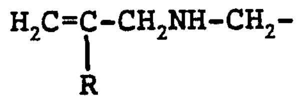

wherein

R is hydrogen or methyl.

The preferred ethylenically-unsaturated perfluoropolyether monomers have the formula:

$Q\text{-}CF_2O\{CF_2CF_2O\}_m(CF_2O\}_nCF_2\text{-}Q$

wherein

Q is defined above, and

m and n designate the number randomly distributed perfluoroethyleneoxy and perfluoromethyleneoxy unit, respectively n and m having independent values, for example, from 1 to 200, and the ratio m/n is 0.2/1 to 5/1, preferably about 0.8/1. A preferred molecular weight range is 2,000 to 4,000.

The perfluoropolyether lubricant is preferably present in an equivalent thickness of about 50 to 3000 angstroms.

## Other Components

Examples of organic solvents that can be used for the magnetic coating composition include ketones, such as acetone, methyl ethyl ketone (MEK), methyl isobutyl ketone, cyclohexanone; esters, such as methyl acetate, ethyl acetate, butyl acetate, ethyl lactate, and monoethyl ether glycol acetate; ethers, such as diethyl ether, glycol dimethyl ether, glycol monomethyl ether, tetrahydroforan (THF), and dioxane; aromatic hydrocarbons, such as benzene, toluene and xylene; chlorinated hydrocarbons, such as methylene chloride, ethylene chloride, carbon tetrachloride, chloroform, ethylene chlorohydrin and dichlorobenzene.

Materials for the non-magnetic support on which the magnetic coating composition is coated include polyesters, such as polyethylene terephthalate or polyethylene-2,6-naphthalate; polyolefins such as polyethylene or polypropylene; cellulose derivatives such as cellulose triacetate; plastics such as polyphenylene sulfides, polycarbonate, polyimide or polyamide; non-magnetic metals such as aluminum, copper, tin, zinc or non-magnetic alloys including the above metals. Preferred examples of the supports include polyethylene terephthalate; polyethylene-2,6-naphthalate and polyimide films. The thickness of these supports is generally about 5 to about 100 micrometers, but can vary widely over the above range depending upon the utility of magnetic recording media.

Magnetic pigments or particles which may be used include those known in the art including, for example, barium ferrite, gamma hematite (gamma-$Fe_2O_3$); magnetic ($Fe_3O_4$); mixed crystals of -$Fe_2O_3$ and $Fe_3O_4$; cobalt-doped $Fe_2O_3$; cobalt-doped $Fe_3O_4$; cobalt-doped mixed crystal of -$Fe_2O_3$ and $Fe_3O_4$] chromium dioxide ($CrO_2$); various kinds of acicular magnetic alloy powders such as Fe-Co, Co-Ni, Fe-Co-Ni, Fe-Co-B, Fe-Co-Cr-B, Mn-Bi, Mn-Al, Fe-Co-V or the like; nitride of Fe, Fe-Co, Fe-Co-Ni or the like; nitride of Fe, Fe-Co, Fe-Co-Ni or the like; or mixtures of more than two kinds of these materials.

## Media Preparation and Configuration

The protective coating/primer layer and the lubricant are preferably coated from solution, e.g., by web coating, spin coating, spray coating, etc. The protective coating/primer layer is typically coated from solvents such as ethanol, butanol, 1-methoxy-2-propanol, MEK, toluene or MEK/toluene. The fluorinated lubricant is typically coated from a fluorinated solvent, such as, Fluorinert, FC43 or FC77, commercially available from Minnesota Mining and Manufacturing Co., St. Paul, Minnesota.

The magnetic media of the present invention may be provided in any desired configuration such as

audio tape, video tape, computer diskettes, or SSR. The present invention is particularly useful in SSR (see, for example, U.S. Patent No. 4,623,570 which is incorporated herein by reference). SSR are held in a stretched configuration with a radial tension.

The invention is further described by the following non-limiting Examples:

## Example I

| Preparation of Magnetic Media Formulation | |
|---|---|
| Reactants | Parts by Weight |
| Cobalt doped gamma-$Fe_2O_3$ | 100 |
| Head Cleaning Agent | 5 |
| Dispersing Agent | 6 |
| Organic Binder | 12 |
| Fatty Acid | 1.5 |
| Crosslinking Agent | 5 |

The reactants were dispersed in a mixture of the solvents methyl ethyl ketone, toluene, and cyclohexanone (weight ratio of 60/20/20 at 45 weight % in a sand mill). After sufficient milling of the reactants, the dispersion was coated onto a polyester terephthalate film having a thickness of 36.5 µm, dried, and calendared to form a magnetic recording layer having a thickness of 4.0 µm.

Typical examples of the reactants include:

Head Cleaning Agent

$Al_2O_3$,$Cr_2O_3$,$TiO_2$

Dispersing Agents

Quaternary Ammonium salts, such as polyethylene oxide quaternary ammonium acetate; phosphonate esters, such as, phosphorylated polyoxyalkyl polyol

Organic Binders

Polyester polyurethane, such as, high molecular weight polyester polyurethane synthesized from neopentyl glycol, polyepsilon caprolactone diol, and p,p diphenyl diisocyanate; vinyl chloride-vinyl acetate copolymer, such as, VAGH, commercially available from Union Carbide Corporation

Fatty Acid

Oleic acid, myristic acid, palmitic acid, stearic acid,

Crosslinking Agent

Mondur CB-60, commercially available from Mobay Chemical Company

## Example II

A magnetic recording medium, prepared as described in Example I, was coated with a solution of Hydantoin Hexacrylate (HHA), see U.S. Patent No. 4,249,011. A 5% solution of HHA in 10:1 toluene/methyl ethyl ketone was applied to the medium by knurl-coating, to saturate the pores of the magnetic layer.

The HHA coated media was stretched taut over a rigid support, and exposed to 10 megarads of electron-beam irradiation to cure the coating of HHA. The stretched media was then incorporated into a stretched surface recording disk (SSR), see U.S. Patent No. 4,623,570.

## Example III

An SSR disk, prepared as described in Example II, was lubricated with a polymerizable perfluoropolyether (see U.S. Patent No. 4,526,833). The lubricant was applied by spraying the rotating disk (600 RPM) from a 7% solution of Fluorinert® solvents, also containing a catalytical amount of peroxide photo initiator. The lubricating coating was cured on exposure of the disk to ultraviolet light in an inert atmosphere, to produce a lubricated SSR disk.

## Example IV

A primer solution of 3.5% 3-aminopropyltrimethoxysilane (3-APS), 0.7% HHA, and a catalytic amount of phenylacetophenone photoinitiator in 10:1 toluene-methyl ethyl ketone was applied, by the method described in Example III, onto the surface of an SSR disk made of the magnetic recording media without HHA overcoat. The primed disk was then lubricated exactly as described in Example III.

## Comparative Example A

The magnetic recording medium of Example I, free of HHA overcoat, was incorporated into an SSR disk without any primer or lubricant applied.

## Comparative Example B

An SSR disk was prepared as described in Example II, but a 1% HHA solution was used instead of a 5% HHA solution.

## Comparative Example C

An SSR disk was prepared as described in comparative Example B, then lubricated with a polymerizable perfluoropolyether as described in Example III.

## Comparative Example D

An SSR disk comprising a magnetic medium prepared as described in Example I and containing myristic acid/butyl myristate lubricants was prepared. The lubricants were applied either by knurl or spray coating.

Test data for the above-described SSR are given in Table 1.

TABLE 1

| Example | Head[1] Flying Height (micrometers) | Solvent[2] Resistance | Wallace[3] Micro Hardness (mg/μm) | Lubricant[4] Absorbance ($mg/100cm^2$) |
|---|---|---|---|---|
| II. Heavy (5%) HHA Overcoat | | > 100 | 287.4 | 6.2 |
| III. Heavy (5%) Overcoat + PFPE Diacrylate | 0.15 | | | |
| IV. HHA + 3-APS priming + PFPE Diacrylate | 0.10 | | | |
| Comparative Example | | | | |
| A. ----- (Blank Magnetic Coating) | 0.10 | 30 | 244.0 | 11.3 |
| B. Light (1%) HHA Overcoat | 0.10 | | | 10.4 |
| C. Light (1%) HHA Overcoat + PFPE Diacrylate | 0.10 | | | |
| D. Fatty Acid/ Ester (Myristic Acid/Butyl Myristate) | 0.10 | | | |

TABLE 1 (Continued)

| Example | Calculated[5] Micro-porosity of Magnetic Coating (vol. %) | Number[6] of CSS Cycles to Failure | Average[7] Number of CSS Cycles to Failure | Number of[8] Days to Failure of NEC Life Test |
|---|---|---|---|---|
| II. Heavy (5%) HHA Overcoat | 8 | | | |
| III. Heavy (5%) Overcoat + PFPE Diacrylate | | 23800, 39354 | 31577 | 57, 200t, 200t |
| IV. HHA + 3-APS priming + PFPE Diacrylate | | 8835, 13208, 22360 | 14800 | 71, 71t, 71t, 134t 134t |
| Comparative Example | | | | |
| A. ----- (Blank Magnetic Coating) | 16 | | | |
| B. Light (1%) HHA Overcoat | 14 | | - | |
| C. Light (1%) HHA Overcoat + PFPE Diacrylate | | 2640, 2782, 12289 | 5904 | 24, 54, 55, 86t, 146 154, 154, 182, 182t, 245t, 245t |
| D. Fatty Acid/Ester (Myristic Acid/Butyl Myristate) | | | | 6, 9, 10, 12, 28, 31, 31, 31, 32, 67 |

Notes to Table 1

1. Flying height of a 5-rail slotted spherical glass head over the spining SSR disk at 3600 rpm, as measured by white-light interferometry (J.K. Knudsen, D.M. Perry, W.L. Skelcher, IEEE Transactions on Magnetics, Vol. MAG-21, September 1986).
2. Solvent resistance -- expressed as the number of times the magnetic coating can be rubbed with a cotton applicator soaked in methyl etheyl ketone before the coating is marked (scored).
3. Wallace microhardness -- the average force required per micrometer of indentation.
4. Lubricant absorbance -- maximum quantity of lubricant that can be absorbed by per 100 $cm^2$ of

magnetic coating (4 ìm in thickness) without visible lubricant cumulated on the surface.

5. Microporosity -- calculated value from the lubricant absorbance.

6. The number of contact start/stop cycles to failure -- failure being defined as the point at which a score mark becomes visible to the naked eye.

7. NEC Life Test -- Failure being defined as in "6"; the NEC life test being defined as continuous running an SSR head over a single track at the inside diameter (I.D.), 40 mm, of an SSR disk at 3600 rpm in a cyclic environment ranging from 5½ C/30% Relative Humidity (RH) to 60½ C/20% RH over a 24 hour period.

8. Number of days to failure. "t" indicates test was terminated before failure occurred.

The examples summarized in Table 1 demonstrate that the integral coating (for example, Example II) reduces porosity, and increases durability. The solvent resistance of the magnetic media of Example II having integral coating is substantially better than that of Comparative Example A without such an integral coating. The reduced porosity of the magnetic media having the integral coating is shown by comparing the lubricant absorbance data for Example II with Comparative Examples A and B. The increased durability can be seen, for example, by referring to the number of CSS cycles to failure for Example III as compared to Comparative Example C.

## Claims

1. A magnetic recording medium having a magnetizable coating, said magnetizable coating comprising:

(a) a polymeric binder containing a magnetizable pigment; and

(b) an effective amount of a protective coating, integral with said binder, and derived from a composition comprising an ethylenically unsaturated heterocyclic compound having the general formula:

$A^1$-Z-$A^2$ (I)

in which $A^1$ and $A^2$ independently are alkoxyalkyl groups having terminal ethylenic unsaturation and having the general formula:

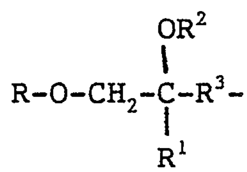

wherein R is selected from:

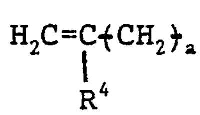 and $[E(CH_2)_b]_m R^5(CH_2)_c$

wherein:

E is selected from

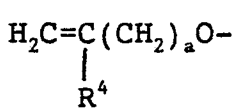 and 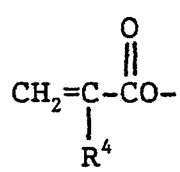

a and c are independently 1 to 6,

b is 0 to 6,

$R^1$ and $R^4$ are independently hydrogen or methyl,

$R^5$ is selected from the group consisting of aliphatic groups having 1 to 15 carbon atoms, aliphatic groups of 1-15 carbons containing one or two catenary oxygen atoms, and

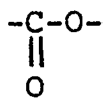 groups

m is an integer of 1 to 5,
$R^2$ is selected from the group consisting of hydrogen,

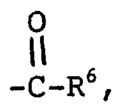 and 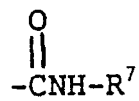

wherein
$R^6$ is selected from the group consisting of alkenyl moieties and alkyl moieties, each preferably having 2-5 carbon atoms and each of which can have a phenyl or carboxyl subsitituent group, and
$R^7$ is selected from the group consisting of alkyl moieties of up to eight carbon atoms, aromatic groups, having up to eight carbon atoms, phenyl groups, acryloyloxyalkyl (1-8 carbons) and methacryloyloxyalkyl (1-8 carbons) groups,
$R^3$ is selected from the group consisting of alkylene groups having 1 to 6 carbon atoms and alkylene groups containing 1-6 carbons and one catenary oxygen atom; and
Z is a heterocyclic group of the formula:

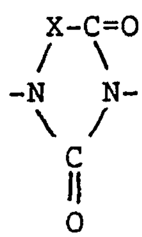

wherein:
X is selected from the group consisting of

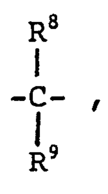 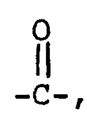 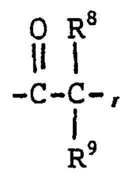

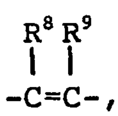 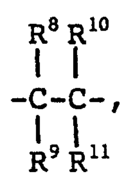 and 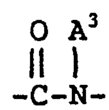

wherein $R^8$, $R^9$, $R^{10}$ and $R^{11}$ are independently selected from hydrogen, lower alkyls (of 1 to 4 carbon atoms), cycloalkyl (of 3 to 6 carbon atoms), and phenyl groups (of 6 to 12 carbon atoms) and $A^3$ is an alkoxyalkyl group as defined above for $A^1$ and $A^2$

2. The recording medium of claim 1 wherein E is:

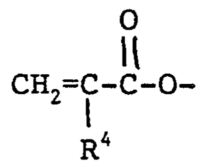

m is 2-5;

X is

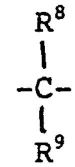

wherein $R^8$ and $R^9$ are selected from the group consisting of -H, $-CH_3$, and $-CH_2-CH_3$;
b is 1; C is 1; $R^2$ is a hydrogen, $R^3$ is $-CH_2-$; and $R^5$ is an alkylene having one carbon.

3. The recording medium of claim 1 wherein said integral coating is provided in an amount sufficient to reduce surface porosity of said polymeric binder and magnetizable pigment to less than about 12% of the total volume of the polymeric binder and magnetizable pigment.

4. The recording medium of claim 1 further comprising a lubricant comprising a polymer having the general formula:

$Q-(R_f)_k-C_aF_{2a}-Z$

wherein

Q comprises a polymerizable group attached to $R_f$ which represents a chain of two or more perfluoroalkylene oxide units which may be branched or straight chain structures, selected from the group consisting of:

$-(C_aF_{2a}O)-$ and 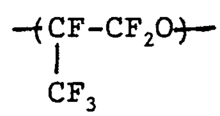

in which

a is independently an integer of 1 to 4,

k is the number of such units having a value from 2 to 300 such that the segment $R_f$ has an average molecular weight of 500 to 10,000, and

Z is

$-OC_aF_{2a}+1$ or Q.

5. The recording medium of claim 4 further comprising an effective amount of an alkoxy silane primer having at least one primary or secondary amine group.

6. The recording medium of claim 5 wherein said alkoxy silane has the following general formula:

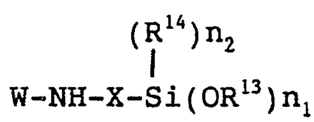

wherein

$R^{13}$ is a lower alkyl having 1 to 3 carbon atoms;

$R^{14}$ is a lower alkyl having 1 to 3 carbon atoms;

$n_1$ is 2 or 3; $n_2$ is 0 or 1;

X is a lower alkylene moiety having 2 to 4 carbon atoms; and

W is hydrogen, a lower alkyl having one to four carbon atoms, or a primary or secondary amine terminated lower alkyl having one to four carbon atoms.

7. The recording medium of claim 1 which is a stretched surface recording disk comprising:

(a) an annular support having

(1) at least one base portion between its inside and outside diameter;

(2) an outer raised annular ridge attached to and projecting from the base portion;

(3) an inner raised annular ridge attached to and projecting from the base portion and having a diameter less than that of the outer raised annular ridge; and

(b) an annular recording medium film concentric with the annular support held in tension across and out of contact with the base portion, being supported by the inner and outer raised annular ridges, said film comprising:

(1) a non-magnetic support,

(2) the polymeric binder on the nonmagnetic support containing the magnetizable pigment, and the protective coating.